# EUROPÄISCHE PATENTSCHRIFT

(11) **EP 0 938 653 B1**
(45) Veröffentlichungstag und Bekanntmachung des Hinweises auf die Patenterteilung: **07.08.2002**
(21) Anmeldenummer: 97951173.0
(22) Anmeldetag: 12.11.1997
(51) Int. Cl.: G01M 3/24, G01L 9/00

(54) **VERFAHREN ZUR BESTIMMUNG VON PARAMETERN, Z.B. FÜLLSTAND, DRUCK, ODER GASZUSAMMENSETZUNG, IN VERSCHLOSSENEN BEHÄLTERN**
METHOD FOR DETERMINING PARAMETERS, FOR EXAMPLE LEVEL, PRESSURE, GAS COMPOSITION IN CLOSED CONTAINERS
PROCEDE DE DETERMINATION DE PARAMETRES TELS QUE NIVEAU, PRESSION OU COMPOSITION GAZEUSE DANS DES RECIPIENTS CLOS

(30) Priorität: 12.11.1996 DE 19646685
(43) Veröffentlichungstag der Anmeldung: 01.09.1999
(73) Patentinhaber: HEUFT SYSTEMTECHNIK GMBH, 56659 Burgbrohl (DE)
(72) Erfinder: HEUFT, Bernhard, D-56659 Burgbrohl (DE); GOLLER, Hans-Ulrich, D-53173 Bonn (DE)
(74) Vertreter: Gritschneder, Martin, Dipl.-Phys.
(86) Internationale Anmeldenummer: EP9706298
(87) Internationale Veröffentlichungsnummer: WO9821557

(56) Entgegenhaltungen:
- EP-A- 0 681 168
- US-A- 5 144 838
- US-A- 5 353 631

## Beschreibung

Die Erfindung betrifft ein Verfahren zur Bestimmung von Parametern, z.B. Füllstand, Druck, Gaszusammensetzung im Kopfraum und Materialzustand, in verschlossenen Behältern, wobei eine Behälterwand zu mechanischen Schwingungen angeregt wird und die dadurch verursachten Schwingungen aufgenommen und in ihrer zeitlichen Abfolge oder ihrer Frequenzzusammensetzung analysiert werden.

Die Bestimmung der Füllstandshöhe von Flüssigkeiten in Behältern erfolgt herkömmlicherweise auf optischem Weg durch Lichtschranken, durch Überprüfung des Gewichts des Behälters oder durch Messung einer von einem Behälter absorbierten hochfrequenten elektromagnetischen Strahlung.

Es sind Verfahren zur Untersuchung von Behältern auf Undichtigkeiten und zur Feststellung des Innendrucks bekannt, bei denen der Deckel eines Behälters elektromagnetisch ausgelenkt wird (US 1,956,301). Weiterhin ist bekannt, daß nicht nur die Auslenkung sondern auch die Vibrationsfrequenz der Behälterwände Rückschlüsse auf Behälterzustände erlaubt (US 2,320,390). Anfänglich wurden die Auslenkung und die Vibrationen der Behälterwände mechanisch abgegriffen. Da diese Vibrationen zu akustischen Signalen führen, können dafür auch elektronische Schaltungen wie Mikrofonanordnungen (US 3,290,922) oder elektrostatische Sensoren (US 3,441,132) verwendet werden.

Es ist ferner bekannt, daß nur Teilbereiche des Signalspektrums für die Dichtigkeits- bzw. Druckkontrolle maßgebend sind, so daß die elektronischen Maßnahmen auf die Auswertung bestimmter Frequenzbereiche reduziert werden können (US 3,802,252). So wurde es möglich, das gefilterte Schwingungssignal zu digitalisieren und für eine Drucküberprüfung die Anzahl der Perioden während eines Meßintervalls zu zählen (US 4,187,718). Um über eine längere Zeit die richtige Frequenz der Deckelschwingung konstant messen zu können, wurden Maßnahmen ergriffen, mit denen über eine Rückkopplung des Vibrationssignals auf die Erregeranordnung eine ungedämpfte Deckelschwingung über wiederholte Anregung mit der Deckelfrequenz erreicht wurde (US 4,406,157). Weiterhin ist es möglich, statt sich bei der Auswertung des Vibrationssignales auf einen Frequenzbereich zu konzentrieren, das gesamte Signal mit Hilfe von Signalprozessoren zu analysieren. Anfänglich wurde das Spektrum alleine auf die Anwesenheit bestimmter Frequenzen untersucht, um darüber die Anwesenheit oder die Abwesenheit von Fehlern zu erkennen (US 5,144,838). Später wurde es möglich, das gemessene Frequenzspektrum mit gespeicherten Referenzspektren von Behältern mit bekanntem Druck zu vergleichen, um so einen Druckwert für den aktuellen Behälter ermitteln zu können (US 5,353,631).

Der Erfindung liegt die Aufgabe zugrunde, ein Verfahren zur umfangreichen Qualitätsprüfung von Behältern zu schaffen, das mit besonders geringem apparativem Aufwand durchgeführt werden kann und sehr genaue Ergebnisse liefert.

Erfindungsgemäß wird diese Aufgabe bei einem Verfahren der eingangs genannten Art dadurch gelöst, daß die durch die primären mechanischen Schwingungen des Deckels angeregten sekundären Schwingungen aufgenommen und analysiert werden, die in dem Behälter einwärts der angeregten Behälterwand entstehen. Das erfindungsgemäße Verfahren ist im Anspruch 1 definiert.

Hebt man eine Seite eines Behälters, z.B. den Deckel eines Getränkebehälters, mit einem elektromagnetischen Puls kurz an und läßt ihn dann wieder los, so regt man ihn zu einer freien,. primären Schwingung an. Die Frequenz dieser Schwingung ist ein Maß für die Deckelspannung, die unter anderem stark von dem im Behälter herrschenden Druck bestimmt wird. Wie die Spannung eines Trommelfelles den Ton der Trommel bestimmt, verändert sich die Deckelschwingung in Abhängigkeit vom Behälterinnendruck. Diese primäre Schwingung des Deckels ist stark gedämpft, so daß die durch den Innendruck bestimmte Schwingung schnell abklingt. Die kurze Schwingungsdauer reicht jedoch aus, um sowohl in den Luftraum außerhalb des Behälters als auch in das Behältervolumen selbst ein akustisches Signal auszusenden. Nimmt man dieses Signal mit einem Schwingungsaufnehmer, z.B. einer Mikrofonanordnung, auf, kann mit einer relativ einfachen Schaltung diese primäre Schwingungsfrequenz in einem ersten zeitlichen Meßfenster über die Messung der Dauer einer Schwingungsperiode festgestellt werden. Die Lage und die Länge des Meßfensters läßt sich für jeden Behältertyp individuell anpassen. Bei Kronenverschlüssen läßt sich z.B. sagen, daß dieses erste zeitliche Meßfenster etwa 0,3 ms nach der Anregung der Deckelschwingung beginnt und etwa 0,4 ms dauert.

Um eine ausreichende Anzahl von primären Schwingungsamplituden zur Anregung sekundärer Schwingungen zu erhalten, wird das erfindungsgemäße Verfahren vorzugsweise bei Behältern angewendet, die zumindest eine starre Behälterwand, z.B. einen metallenen Kronenverschluß, aufweisen. Behälter aus Kunststoff oder mit Kunststoffverschlüssen sind weniger geeignet. Die Eigenfrequenz der Behälterwand, z.B. des Verschlusses, liegen vorzugsweise im Bereich von 1/10 bis dem 10fachen des zu erwartenden Signals der sekundären Schwingungen, bei Getränkeflaschen beispielsweise zwischen 2 und 12 kHz.

Innerhalb des Behälters breitet sich das Signal des Deckels mit der Schallgeschwindigkeit des Gases im Kopfraum bzw. mit der der Flüssigkeit aus. Die Übergänge Flüssigkeit-Gas bzw. Flüssigkeit-Behältermaterial reflektieren jeweils die Schallwellen, so daß sich stehende Wellen innerhalb des Behälters als sekundäre Schwingungen ausbilden können. Da die Wellenlänge der stehenden Welle im Kopfraum und die der stehenden Welle in der Flüssigkeit von den Abständen der Phasenübergänge abhängen, ist die Frequenz der sekundären Schwingung bei bekannter Zusammensetzung des Gases im Kopfraum ein Maß für den Füllstand innerhalb des Behälters. Da die sekundären Schwingungen innerhalb des Behälters erst durch die ursprünglichen, primären Deckelschwingungen angeregt und mit Energie versorgt werden, sind die stehenden Wellen erst nach dem Abklingen des stark gedämpften Deckelsignals ausgeprägt und über die Vibration der Seitenwände des Behälters, insbesondere den Deckel, als Vibrationssignal, z.B. als akustisches Signal, nachweisbar. So ist es möglich, mit einem Schwingungsaufnehmer auch dieses Signal aufzunehmen und durch geeignete Wahl eines zweiten Meßfensters den Füllstand im Behälter zu bestimmen.

Bei einer ersten Ausführungsform der Erfindung wird daher zwischen der primären Schwingung des Deckels und den durch diese Schwingung angeregten stehenden Wellen oder sekundären Schwingungen innerhalb des Kopfraumes des Behälters und innerhalb des Flüssigkeitsvolumens dadurch unterschieden, daß das zweite Meßfenster so gelegt wird, daß die primären Schwingungen des Deckels selbst im wesentlichen abgeklungen sind und die aufgenommenen Schwingungssignale daher im wesentlichen von den stehenden Wellen oder sekundären Schwingungen stammen.

Können die beiden Meßfenster nicht genügend weit auseinandergelegt werden, bleibt eine Beeinflussung der effektiven Periodendauer der primären Deckelschwingung durch die sich aufbauende stehende Welle im Kopfraum bestehen. Sind aber nach Ablauf des zweiten Meßfensters die Frequenz der stehenden Welle als Füllstandsinformation und die Frequenz der primären Deckelschwingung bekannt, kann die Füllstandsinformation auch dazu genutzt werden, um die Beeinträchtigung der Druckinformation im Rahmen der Meßgenauigkeit vollständig zu kompensieren. Gerade hierbei zeigt sich ein weiterer Vorteil der zeitlich differenzierten Analyse eines einzigen Signales, da kein Abgleich zwischen unterschiedlichen Sensoren erfolgen muß und so die hohe Genauigkeit mit einfachen Mitteln erreicht wird.

Aus den Signalen der primären und der sekundären Schwingungen lassen sich weitere Informationen über Parameter eines verschlossenen Behälters gewinnen. Die Frequenz der sekundären Schwingung hängt hauptsächlich von der Füllstandshöhe, der Temperatur und der Gaszusammensetzung ab, z.B. dem Mischungsverhältnis zweier Gase. Wird die Füllstandhöhe in herkömmlicher Weise, z.B. durch Gewichtsbestimmung oder mittels einer Lichtschranke gemessen, und ist die Temperatur bekannt oder konstant, so variiert die Frequenz der sekundären Schwingung nur noch mit Gaszusammensetzung, also z.B. dem Mischungsverhältnis zweier Gase. Mittels des erfindungsgemäßen Verfahrens kann daher bei bekannter oder konstanter Temperatur und bekannter Füllstandshöhe aus der Frequenz die Schallgeschwindigkeit und damit die Gaszusammensetzung ermittelt werden. Damit kann das Verfahren auch z.B. zur Bestimmung des CO₂-Gehaltes von kohlensäurehaltigen Getränken verwendet werden.

Das erfindungsgemäße Verfahren ermöglicht also, mit geringem technischem Aufwand aus dem Vibrationssignal gezielt Informationen über den Füllstand, den Innendruck und die Gaszusammensetzung eines verschlossenen Behälters zu ermitteln. Da diese Informationen zeitlich unabhängig voneinander gewonnen werden, können je nach Anforderung die Einzelinformationen auch kombiniert erarbeitet werden.

Bei einer zweiten Ausführungsform des erfindungsgemäßen Verfahrens wird nicht oder nicht nur durch geeignete Wahl des Meßfensters zwischen den Schwingungen des Deckels und den stehenden Wellen im Kopfraum und innerhalb des Flüssigkeitsvolumens unterschieden, sondern wird - gegebenenfalls zusätzlich - durch eine Frequenzanalyse (z.B. Fourier-Analyse) zwischen beiden Schwingungen durch deren Frequenz unterschieden.

Z.B. kann die Schwingung des Deckels bei 7 kHz und die Frequenz der stehenden Wellen bei 8 kHz liegen. Aufgrund der festgestellten Frequenz der stehenden Wellen im Kopfraum des Behälters und innerhalb des Flüssigkeitsvolumens läßt sich bei bekannter Gaszusammensetzung die Füllstandshöhe mit einer Genauigkeit von 0,1 bis 0,2 mm bestimmen.

Auch innerhalb des Behältermaterials breiten sich nach dem gleichen Erregungsprinzip Schallwellen aus, die charakteristisch für den jeweiligen Behälter sind. Abweichungen von der Standardfrequenz helfen Materialfehler nachzuweisen. Aufgrund der Verhältnisse der Schwingungsamplituden sind die Schwingungsanteile der Behälterschwingung nicht einzeln nachzuweisen, können aber im Gesamtspektrum nach einer Frequenzanalyse eindeutig erkannt werden.

Zusätzlich ist eine Kombination des neuen Verfahrens mit der Analyse des Frequenzspektrums des bereits bekannten Verfahrens möglich. Da die gezielten Einzelinformationen eine genaue Zuordnung der Einzelfrequenzen zulassen, kann mit ihrer Hilfe das Gesamtspektrum besser verstanden und ausgewertet werden, so daß zusätzlich auch eine Kontrolle des Behältermaterials möglich wird.

Tatsächlich ist es im allgemeinen zweckmäßig, sowohl mit Meßfenstern als auch mit Frequenzanalyse zu arbeiten. Das mittels Fourier-Analyse erhaltene Frequenzspektrum ist im allgemeinen relativ komplex, da der Signalverlauf mehrere Spitzen aufweist. Da die zeitliche Abfolge der Schwingungen nicht aus dem Frequenzspektrum ablesbar ist, ist die Zuordnung der Schwingungsfrequenzen bisweilen nicht eindeutig. Bei gleichem Behältertyp können der Innendruck und damit die Deckelspannung einerseits und der Füllstand andererseits unabhängig voneinander variieren, so daß auch der Fall auftreten kann, daß die primären Schwingungen und die sekundären Schwingungen die gleiche Frequenz aufweisen. Die Kombination der Frequenzanalyse mit der direkten Messung der Frequenz innerhalb von Meßfenstern macht jedoch in jedem Fall eine vollständige Interpretation der Frequenzanalyse möglich. Dazu kann in einem automatischen Suchverfahren die Lage der einzelnen Spitzen ermittelt und Übereinstimmungen mit den Einzelergebnissen aus den beiden Meßfenstern bestimmt werden. Die Frequenzspitze, die am besten zu dem Ergebniswert aus dem ersten Meßfenster paßt, entspricht der Druckschwingung; die Frequenzspitze, die am besten zu dem Ergebniswert aus dem zweiten Meßfenster paßt, entspricht dem Füllhöhenwert. Das Ergebnis des Vergleiches kann dadurch erhärtet werden, daß zu dem Füllhöhenwert im Spektrum weitere Spitzen existieren, die im Verhältnis 1/2 zu 2/2 zu 3/2 zueinander stehen. Gleiche Nebenfrequenzen sind für die Druckschwingung nicht zu finden. Nachdem auf diese Art eine Zuordnung getroffen werden konnte bleibt im allgemeinen eine einzige ausgeprägte Spitze im Spektrum übrig. Diese entspricht der Schwingung im Behältermaterial.

Es ist bekannt, daß die gesuchten Meßgrößen von mehreren Parametern abhängen. So bestimmt z.B. die Temperatur des Füllgutes auch bei vollständig intakten Behältern stark den Innendruck. Daher können Unterbrechungen eines normalerweise konstanten Abfüllprozesses zu Temperaturschwankungen und darüber zu Verschiebungen der Meßwerte führen. Daher muß bei einem realen Meßaufbau unter Umständen Vorsorge getroffen werden, temperaturbedingte Verschiebungen zu kompensieren. So ist das erfindungsgemäße Verfahren darauf ausgelegt, mit zusätzlichen Sensoren Temperaturinformationen aufzunehmen und die Meßwerteverschiebung vollständig zu kompensieren.

Die Verarbeitung von akustischen Signalen kann dann von Störungen beeinträchtigt werden, wenn die Meßapparatur in Umgebungen mit hohem Lärmpegel arbeiten soll. Damit diese potentiellen Störungen deutlich reduziert werden, kann mit aktiven und passiven Maßnahmen das Signal- zu Störverhältnis verbessert werden. Das erfindungsgemäße Verfahren sieht daher neben einer lärmdämmenden Ummantelung der Apparatur auch vor, daß das eigentliche Meßmikrofon durch eine geeignete Anzahl von zusätzlichen und geeignet plazierten Mikrofonen ergänzt wird. Z.B. ist in einer einfachen Bauform möglich, ein zweites Mikrofon einzusetzen, das in die entgegengesetzte Richtung orientiert ist. Die Subtraktion der Umgebungsgeräusche vom Meßsignal kann das Nutzsignal stärker hervorheben. In einem aufwendigeren Aufbau werden mehrere Mikrofone auf einem Kreis angeordnet, dessen Fläche senkrecht zur Mittelachse des untersuchten Behälters steht und dessen Mittelpunkt genau auf der Mittelachse des untersuchten Behälters liegt. Diese Anordnung bietet den Vorteil, daß das Nutzsignal von allen Mikrofonen phasengleich aufgenommen wird, während alle Störgeräusche von den verschiedenen Mikrofonen phasenunterschiedlich aufgenommen werden. Eine einfache Addition der einzelnen Mikrofonsignale verbessert damit das Signal- zu Störverhältnis.

Die Einzelinformationen und die kombinierten Informationen über Füllstand, Innendruck und Behälterzustand können unter verschiedenen Gesichtspunkten ausgewertet werden. Zum einen läßt ein direkter Vergleich der jeweiligen Einzelinformationen mit vorgegebenen Grenzwerten eine eindeutige Identifizierung von fehlerhaft befüllten, undichten oder beschädigten Behältern zu. Zum anderen kann eine statistische Auswertung über die Gesamtproduktion bzw. wählbare Teilabschnitte der Produktion die Qualität der kontrollierten Behälter widerspiegeln. Die Analyse der Mittelwerte der Einzelverteilungen ergibt die Möglichkeit, die tatsächlichen Füllmengen und die erreichten Behälterdrücke mit den Produktionsvorgaben zu vergleichen und gegebenenfalls den Produktionsprozeß entsprechend zu steuern. Die Streuung der einzelnen Verteilungen spiegelt die Konstanz des Produktionsprozesses wider und ihre Auswertung erlaubt eine qualitative Beurteilung des Gesamtprozesses, eine präventive Instandhaltung und eine Optimierung des Produktionsablaufes.

Die kontinuierliche statistische Auswertung räumt weiterhin die Möglichkeit ein, die Beurteilung der einzelnen Behälter an die momentane Lage des Produktionsmittelwertes zu koppeln und eine Bewertung der Meßwertabweichungen im Verhältnis zur statistischen Standardabweichung vorzunehmen. Damit ermöglicht die statistische Überwachung eine feinfühlige Nachführung der Grenzwerte und damit gute Erkennung von fehlerhaften Behältern auch unter wechselnden Produktionsbedingungen.

Ein Ausführungsbeispiel der Erfindung wird nachfolgend anhand der Zeichnung näher erläutert. Es zeigen:
- Fig. 1: im Querschnitt eine Vorrichtung zur Bestimmung der Füllstandshöhe von Flüssigkeiten in Behältern, die durch einen Deckel verschlossen sind;
- Fig. 2: ein Diagramm der Signalamplitude über der Zeit; und
- Fig. 3: ein Diagramm einer Frequenzanalyse.

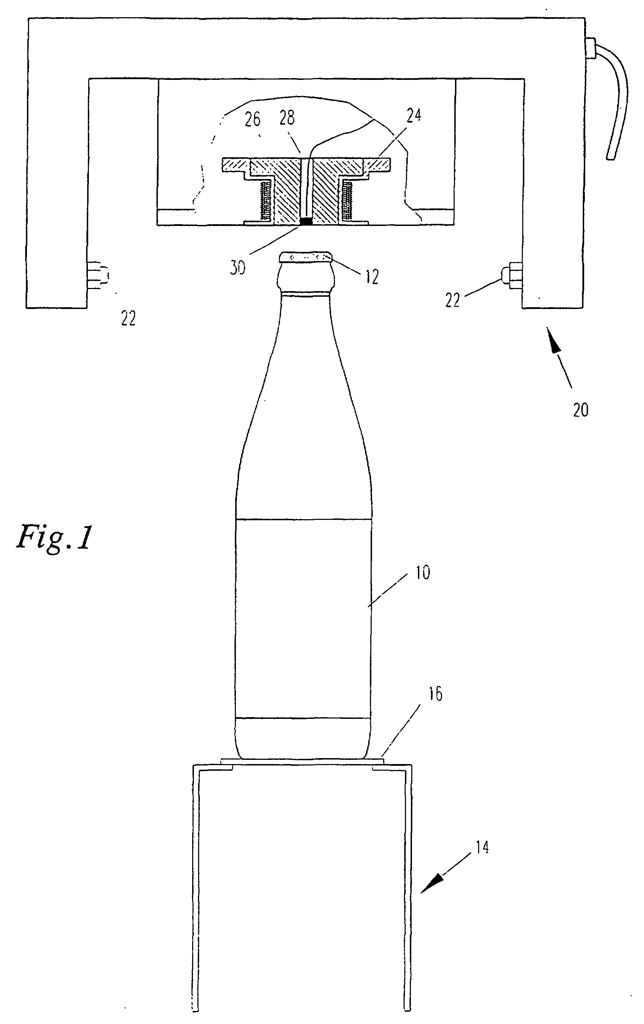

Bei dem in Fig. 1 dargestellten Ausführungsbeispiel ist der Flüssigkeitsbehälter eine übliche 0,5 l-Bierflasche 10 mit einem Kronenverschluß 12. Die Flasche 10 wird stehend auf einem Transporteur 14 mittels einer Gliederkette 16 unter einer Meßeinrichtung 20 hindurchtransportiert.

Die Meßeinrichtung 20 enthält eine Lichtschranke 22, deren Lichtstrahl die Flasche 10 unmittelbar unterhalb der Mündungsöffnung trifft, die durch den Kronenverschluß 12 verschlossen ist. In einem Abstand von 3 bis 10 mm über dem Kronenverschluß 12 ist eine Magnetspule 24 angeordnet, deren Achse vertikal und damit parallel zur Längsachse der Flasche 12 verläuft. Die Magnetspule 24 enthält einen Kern 26 mit einer axialen Bohrung 28, an deren unterem Ende ein Mikrofon 30 angeordnet ist.

Die Höhe der Lichtschranke 22 über dem Transporteur 14 und ebenso der vertikale Abstand zwischen der Lichtschranke 22 und der Magnetspule 24 sowie dem Mikrofon 30 ist veränderbar, so daß Flaschen unterschiedlicher Größe und Form und auch sonstige Behälter untersucht werden können.

Im Betrieb erzeugt die Lichtschranke 22 ein Triggersignal zu dem Zeitpunkt, zu dem sich der Kronenverschluß 12 unter der Magnetspule 24 befindet und die Magnetspule 24 wird durch dieses Triggersignal mittels eines kurzen Stromimpulses erregt. Das dadurch erzeugte kurzzeitige Magnetfeld übt auf den aus Metall bestehenden Kronenverschluß 12 kurzzeitig eine nach oben gerichtete Kraft aus, die in dem Kronenverschluß 12 eine primäre mechanische Schwingung oder Vibration auslöst. Diese Vibration hat typischerweise eine Frequenz von 7 kHz und kann daher als akustisches Signal von dem Mikrofon 30 aufgenommen werden.

Die primäre Schwingung des Kronenverschlusses 12 ist stark gedämpft und klingt innerhalb von etwa 2 ms ab. Gleichzeitig wird durch die primäre Schwingung des Kronenverschlusses 12 innerhalb der Luft- oder Gassäule zwischen dem Kronenverschluß 12 und der in der Flasche 10 befindlichen Flüssigkeit sowie innerhalb der Flüssigkeit eine stehende akustische Welle angeregt. Diese stehenden Wellen existieren als sekundäre Schwingungen zeitlich verschoben zu den primären Schwingungen des Kronenverschlusses 12 und haben eine Frequenz von z.B. 8 kHz. Sie existieren noch, wenn die primäre Schwingung des Kronenverschlusses 12 bereits abgeklungen ist und können durch den Kronenverschluß 12 hindurch mittels des Mikrofons 30 aufgenommen werden.

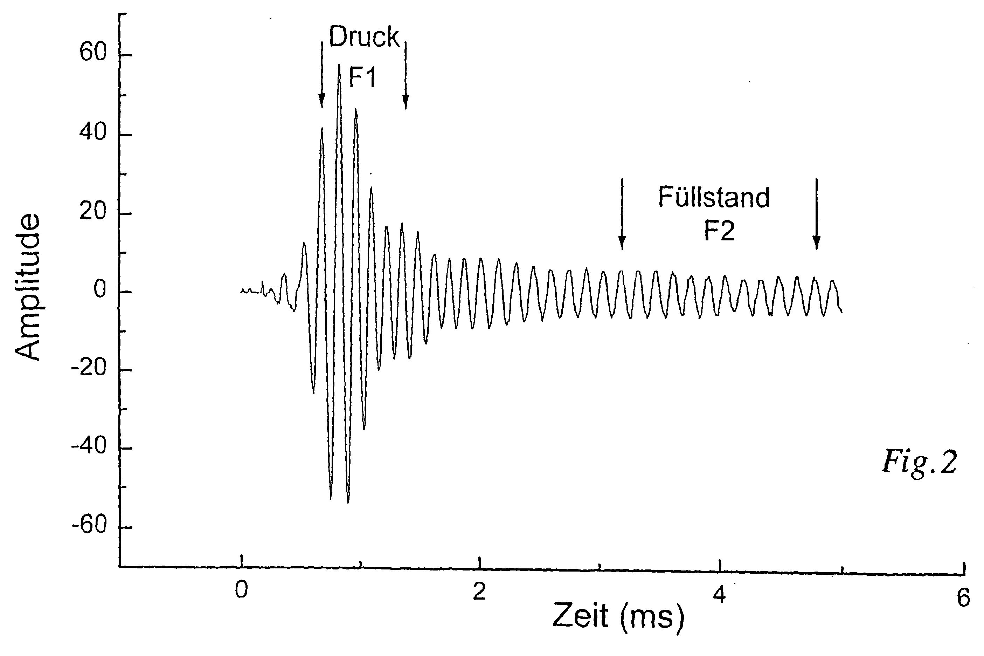

Fig. 2 zeigt den Verlauf der Signalamplitude (relative Einheiten) über der Zeit in Millisekunden. Anhand eines solchen Diagrammes ist ein erstes Auswertungsverfahren möglich, bei dem der zeitliche Abstand zwischen den primären und den sekundären Schwingungsformen zur Unterscheidung ausgenützt wird, wobei innerhalb eines ersten Meßfensters F1 von z.B. 0,3 bis 0,7 ms nach dem magnetischen Impuls (= 0 ms) das von dem Mikrofon 30 aufgenommene akustische Signal hauptsächlich von der primären Eigenschwingung des Kronenverschlusses 12 herrührt. Aus der gemessenen Frequenz kann der innerhalb der Flasche 10 herrschende Druck ermittelt werden. Innerhalb eines zweiten Meßfensters F2 von z.B 3 bis 4,8 ms nach dem magnetischen Impuls rührt das von dem Mikrofon 30 aufgenommene akustische Signal hauptsächlich von den sekundären Schwingungen her, die sich in der Zwischenzeit innerhalb der Flasche 10 als stehende Wellen ausgebildet haben. Die Frequenz dieser stehenden Wellen ist kennzeichnend für die Füllstandshöhe. Hat eine Flasche 10 beispielsweise bei einer Soll-Füllstandshöhe, die einer Höhe des Luftraumes zwischen Flüssigkeitsspiegel und Kronenverschluß 12 von 5 cm entspricht, eine Frequenz von 8 kHz, so beträgt die Frequenz bei einer Unterfüllung von 0,5 cm 7,25 kHz.

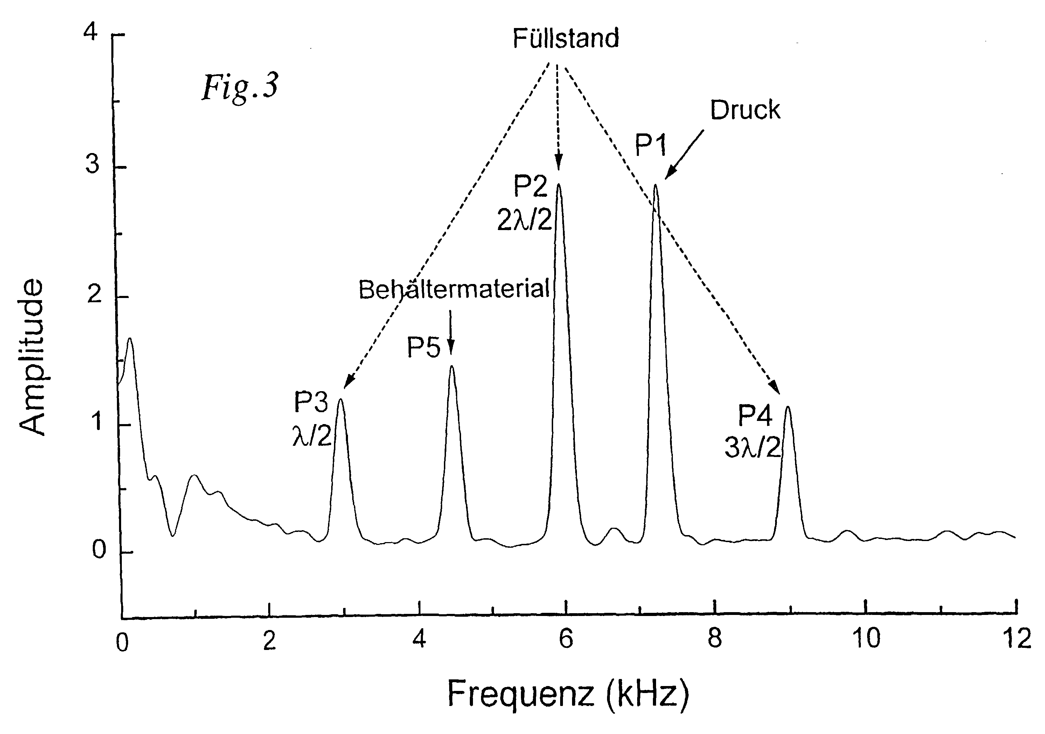

Fig. 3 zeigt das Ergebnis einer Frequenzanalyse, die ein zweites Auswertungsverfahren ermöglicht, bei dem das gesamte innerhalb einer Zeitdauer von z.B. 10 ms nach dem magnetischen Impuls aufgenommene akustische Signal einer Fourier-Analyse unterzogen wird. Bei dem Ausführungsbeispiel von Fig. 3 hat das Frequenzspektrum eine Spitze P1 bei 7,2 kHz, die der primären Schwingung des Kronenverschlusses 12 entspricht, und eine zweite Spitze P2 bei 6 kHz, die der sekundären Schwingung der stehenden Wellen innerhalb der Flasche 10 entsprechen, wobei diese Frequenz abhängig von der Füllstandshöhe ist. Es lassen sich bei anderen Frequenzen noch weitere Amplitudenspitzen feststellen. Wird die Frequenz der Spitze P2 mit λ bezeichnet, so treten bei den Frequenzen λ/2 und 3λ/2 Spitzen P3 bzw. P4 auf, die von Oberschwingungen der sekundären Schwingung herrühren. Ferner ist eine Spitze P5 erkennbar, die durch Schwingungen des Behältermaterials verursacht wird. Risse oder Sprünge innerhalb der Wand der Flasche 10 machen sich durch eine Aufteilung dieser Frequenzamplitude P5 auf Amplitudenspitzen bei mehreren Frequenzen oder eine Verschiebung zu einer anderen Frequenz oder ein völliges Verschwinden der Spitze P5 bemerkbar.

Die für die beiden Auswertungsverfahren eingesetzten elektronischen Schaltungen selbst sind von herkömmlicher Bauart und werden daher nicht beschrieben.

Die Ermittlung der Frequenz der Schwingungen erfolgt zweckmäßig über eine direkte Messung der Dauer der Schwingungsperioden, in dem die Zeitspanne zwischen einer bestimmten Anzahl, z.B. acht positiven Nulldurchgängen des Signals mittels eines Taktsignals von z.B. 8 MHz gemessen wird. Die Auswertung der Signale erfolgt zweckmäßig durch Vergleich der gemessenen Signalwerte mit gespeicherten Erfahrungswerten.

## Patentansprüche

1. Verfahren zur Bestimmung von Parametern von verschlossenen Behältern, wobei in einer Behälterwand (12) primäre mechanische Schwingungen angeregt werden, **dadurch gekennzeichnet,**
- **daß** die durch die primären mechanischen Schwingungen der Behälterwand (12) in dem Behälter (10) angeregten sekundären Schwingungen, die innerhalb des Raumes zwischen Verschluß (12) und der Flüssigkeit stattfinden, aufgenommen und analysiert werden, wobei aus der festgestellten Frequenz dieser Schwingungen die Parameter ermittelt werden.

2. Verfahren nach Anspruch 1, **dadurch gekennzeichnet, daß** aus der festgestellten Frequenz der sekundären Schwingungen der Füllstand ermittelt wird.

3. Verfahren nach Anspruch 1 oder 2, **dadurch gekennzeichnet, daß** aus der festgestellten Frequenz der sekundären Schwingungen die Qualität des Behältermaterials beurteilt wird.

4. Verfahren nach einem der Ansprüche 1 bis 3, **dadurch gekennzeichnet, daß** zusätzlich auch die primären Schwingungen des Verschlusses (12) aufgenommen und analysiert werden, wobei aus der Frequenz dieser primären Schwingungen der in dem Behälter (10) herrschende Innendruck ermittelt wird.

5. Verfahren nach einem der Ansprüche 1 bis 4, **dadurch gekennzeichnet, daß** die Frequenzen der primären und sekundären Schwingungen durch Analyse des Frequenzspektrums ermittelt werden.

6. Verfahren nach einem der Ansprüche 1 bis 4, **dadurch gekennzeichnet, daß** die sekundären Schwingungen dadurch getrennt von den primären Schwingungen aufgenommen werden, daß nur die innerhalb eines zeitlichen Meßfensters (F2) auftretenden Schwingungen aufgenommen werden, innerhalb dessen die primären Schwingungen bereits abgeklungen sind.

7. Verfahren nach Anspruch 6, **dadurch gekennzeichnet, daß** die primären und die sekundären Schwingungen innerhalb unterschiedlicher zeitlicher Meßfenster (F1, F2) aufgenommen werden.

8. Verfahren nach einem der Ansprüche 1 bis 7, **dadurch gekennzeichnet, daß** die aufgenommenen Schwingungssignale sowohl einer Frequenzanalyse unterzogen werden als auch die primären und die sekundären Schwingungen innerhalb unterschiedlicher zeitlicher Meßfenster (F1, F2) aufgenommen werden.

9. Verfahren nach einem der vorausgehenden Ansprüche, **dadurch gekennzeichnet, daß** zur Verbesserung des Nutzsignal/Störsignal-Verhältnisses die Signale mittels einer Mikrofonanordnung aufgenommen werden, die durch Subtraktion der Umgebungsgeräusche vom Meßsignal das Nutzsignal hervorhebt.

10. Verfahren nach Anspruch 9, **dadurch gekennzeichnet, daß** eine kreisförmige Mikrofonanordnung verwendet wird, die durch phasengleiche Addition der einzelnen Signale eine Hervorhebung des Nutzsignales bewirkt.

11. Verfahren nach einem der vorausgehenden Ansprüche, **dadurch gekennzeichnet, daß** die aus verschiedenen zeitlichen Meßfenstern unabhängig gewonnenen Einzelinformationen genutzt werden, um die gegenseitige Beeinflussung zu kompensieren.

12. Verfahren nach einem der vorausgehenden Ansprüche, **dadurch gekennzeichnet, daß** mit Hilfe von zusätzlichen Wärmesensoren der Einfluß der Produkttemperatur auf die Meßgrößen kompensiert wird.

13. Verfahren nach einem der vorausgehenden Ansprüche, **dadurch gekennzeichnet, daß** durch die Kombination mit einer unabhängig gewonnenen Füllstandsinformation die Zusammensetzung des Gases im Kopfraum des Behälters über die Messung der Schallgeschwindigkeit bestimmt wird.

## Claims

1. Method for the determination of parameters of closed containers, wherein primary mechanical oscillations are excited in a container wall (12), **characterised in that**
- the secondary oscillations which are excited in the container (10) by the primary mechanical oscillations of the container wall (12) and which occur within the space between a closure (12) and the liquid are picked up and analysed, the parameters being determined from the ascertained frequency of these oscillations.

2. Method according to Claim 1, **characterised in that** the filling level is determined from the ascertained frequency of the secondary oscillations.

3. Method according to Claim 1 or 2, **characterised in that** the quality of the container material is evaluated from the ascertained frequency of the secondary oscillations.

4. Method according to one of Claims 1 to 3, **characterised in that** the primary oscillations of the closure (12) are also additionally picked up and analysed, the internal pressure prevailing in the container (10) being determined from the frequency of these primary oscillations.

5. Method according to one of Claims 1 to 4, **characterised in that** the frequencies of the primary and secondary oscillations are determined by analysis of the frequency spectrum.

6. Method according to one of Claims 1 to 4, **characterised in that** the secondary oscillations are picked up separately from the primary oscillations **in that** only those oscillations are picked up which occur within a time measurement window (F2) within which the primary oscillations have already decayed.

7. Method according to Claim 6, **characterised in that** the primary and secondary oscillations are picked up within different time measurement windows (F1, F2).

8. Method according to one of Claims 1 to 7, **characterised** both in that the picked-up oscillation signals are subjected to a frequency analysis and the primary and secondary oscillations are picked up within different time measurement windows (F1, F2).

9. Method according to one of the preceding Claims, **characterised in that**, for the purpose of improving the useful signal / interference signal ratio, the signals are picked up by means of a microphone arrangement which accentuates the useful signal by subtraction of the ambient noises from the measured signal.

10. Method according to Claim 9, **characterised in that** a circular microphone arrangement is used which accentuates the useful signal through phase-balanced addition of the individual signals.

11. Method according to one of the preceding Claims, **characterised in that** the individual items of information obtained independently from different time measurement windows are used to compensate the mutual influence.

12. Method according to one of the preceding Claims, **characterised in that** the influence of the product temperature on the measured quantities is compensated by means of additional heat sensors.

13. Method according to one of the preceding Claims, **characterised in that** the composition of the gas in the head space of the container is determined through the measurement of the sound velocity, in combination with independently obtained filling level information.

## Revendications

1. Procédé de détermination de paramètres de récipients clos, moyennant quoi des oscillations mécaniques primaires sont engendrées dans une paroi de récipient (12), **caractérisé en ce que**,
les oscillations mécaniques secondaires engendrées dans le récipient (10) par les oscillations mécaniques primaires de la paroi de récipient (12) qui se produisent à l'intérieur de l'espace entre la fermeture (12) et le liquide sont enregistrées et analysées, moyennant quoi les paramètres sont établis à partir de la fréquence déterminée de ces oscillations.

2. Procédé selon la revendication 1, **caractérisé en ce que** le niveau de remplissage est établi à partir de la fréquence déterminée des oscillations secondaires.

3. Procédé selon la revendication 1 ou 2, **caractérisé en ce que** la qualité du matériau du récipient est établie à partir de la fréquence déterminée des oscillations secondaires.

4. Procédé selon l'une des revendications 1 à 3, **caractérisé en ce que**, en outre, les oscillations primaires de la fermeture (12) sont également enregistrées et analysées, moyennant quoi la pression intérieure régnant dans le récipient (10) est établie à partir de la fréquence de ces oscillations primaires.

5. Procédé selon l'une des revendications 1 à 4, **caractérisé en ce que** les fréquences des oscillations primaires et secondaires sont déterminées par l'analyse du spectre de fréquences.

6. Procédé selon l'une des revendications 1 à 4, **caractérisé en ce que** les oscillations secondaires sont enregistrées séparément des oscillations primaires, **en ce que** seules sont enregistrées les oscillations apparaissant à l'intérieur d'une fenêtre de mesure temporelle (F2) à l'intérieur de laquelle les oscillations primaires se sont déjà évanouies.

7. Procédé selon la revendication 6, **caractérisé en ce que** les oscillations primaires et secondaires sont enregistrées à l'intérieur de différentes fenêtres de mesure temporelles (F1, F2).

8. Procédé selon l'une des revendications 1 à 7, **caractérisé en ce que**, de même que les signaux d'oscillations enregistrés sont soumis à une analyse de fréquence, les oscillations primaires et secondaires sont enregistrées à l'intérieur de différentes fenêtres de mesure temporelles (F1, F2).

9. Procédé selon l'une des revendications précédentes, **caractérisé en ce que**, pour améliorer le rapport signal utile/signal parasite, les signaux sont enregistrés à l'aide d'un dispositif de microphones qui intensifie le signal utile en soustrayant les bruits environnants du signal de mesure.

10. Procédé selon la revendication 9, **caractérisé en ce qu'**on utilise un dispositif de microphones circulaire qui provoque une intensification du signal par l'addition équiphasée des signaux individuels.

11. Procédé selon l'une des revendications précédentes, **caractérisé en ce que** les informations individuelles obtenues indépendamment à partir de diverses fenêtres de mesure temporelles sont utilisées pour compenser l'influence mutuelle.

12. Procédé selon l'une des revendications précédentes, **caractérisé en ce que** l'influence de la température du produit sur les valeurs de mesure est compensée à l'aide de détecteurs de chaleur supplémentaires.

13. Procédé selon l'une des revendications précédentes, **caractérisé en ce que**, grâce à la combinaison avec une information sur le niveau de remplissage obtenue indépendamment, la composition du gaz dans le compartiment de tête du récipient est déterminée par la mesure de la vitesse du son.
